# EUROPÄISCHE PATENTSCHRIFT

(11) **EP 1 387 786 B1**
(45) Veröffentlichungstag und Bekanntmachung des Hinweises auf die Patenterteilung: **16.02.2005**
(21) Anmeldenummer: 02735047.9
(22) Anmeldetag: 17.04.2002
(51) Int. Cl.: B60T 8/00, B60T 8/52

(54) **VERFAHREN UND SYSTEM ZUM REGELN DER BREMSKRAFT BEI EINEM FAHRZEUG**
METHOD AND SYSTEM FOR CONTROLLING THE BRAKING FORCE OF A MOTOR VEHICLE
PROCEDE ET SYSTEME POUR REGULER LA FORCE DE FREINAGE D'UN VEHICULE

(30) Priorität: 10.05.2001 DE 10122614
(43) Veröffentlichungstag der Anmeldung: 11.02.2004
(73) Patentinhaber: ROBERT BOSCH GMBH, 70442 Stuttgart (DE)
(72) Erfinder: GROB, Ferdinand, 74354 Besigheim (DE); ARNDT, Dietmar, 74343 Kleinsachsenheim (DE); MAIER-LANDGREBE, Rolf, 71394 Kernen (DE)
(86) Internationale Anmeldenummer: PCT/DE2002/001422
(87) Internationale Veröffentlichungsnummer: WO 2002/090160

(56) Entgegenhaltungen:
- EP-A- 1 095 834
- US-A- 4 822 113
- US-A- 5 279 394
- US-A- 5 605 387

## Beschreibung

Die Erfindung betrifft ein Verfahren zum Regeln der Bremskraft bei einem Fahrzeug mit den Schritten: Ermitteln von Istwerten von Regelgrößen, Ermitteln von Sollwerten von Regelgrößen, Vergleichen der Istwerte mit den Sollwerten, wodurch Vergleichsergebnisse erzielt werden, und Beeinflussen von Radkräften auf der Grundlage der Vergleichsergebnisse. Die Erfindung betrifft ferner ein System zum Regeln der Bremskraft bei einem Fahrzeug mit Mitteln zum Ermitteln von Istwerten von Regelgrößen, Mitteln zum Ermitteln von Sollwerten von Regelgrößen, Mitteln zum Vergleichen der Istwerte mit den Sollwerten, wodurch Vergleichsergebnisse erzielt werden, und Mitteln zum Beeinflussen von Radkräften auf der Grundlage der Vergleichsergebnisse.

### Stand der Technik

Dokument US-A-4,822,113 offenbart die Oberbegriffe der Ansprüche 1 und 13.

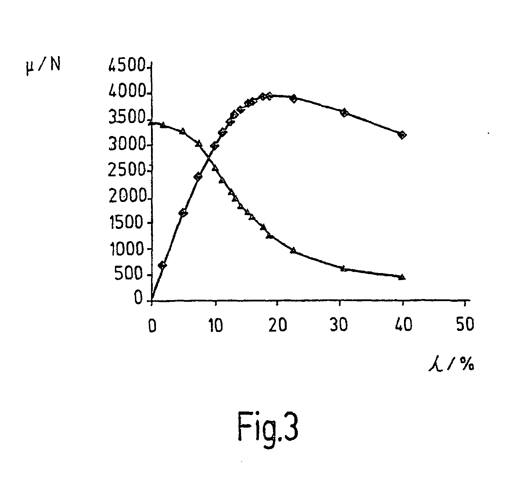

Gattungsgemäße Regelverfahren beziehungsweise Regelsysteme sind beispielsweise im Rahmen von ABS (AntiBlockiersystem), ASR (Antriebsschlupfregelung) und ESP (elektronisches Stabilitätsprogramm) realisiert. Als Grundlage derartiger Systeme können in vorteilhafter Weise Radkraft-Schlupf-Kurven verwendet werden, die auch als µ-Schlupf-Kurven bezeichnet werden. Beispiele derartiger Kurven sind in Figur 3 dargestellt, wobei die Kurve a eine Längskraft-Längsschlupf-Kennlinie ist, nachfolgend als Längskraft-Kennlinie bezeichnet, und die mit b bezeichnete Kurve eine Querkraft-Längsschlupf-Kennlinie ist, die nachfolgend als Querkraft-Kennlinie bezeichnet wird. Es ist erkennbar, dass bei geringen Längskräften, das heißt beispielsweise geringen Bremsmomenten, der Längsschlupf linear mit der Radkraft ansteigt, die ein Reifen auf die Fahrbahn überträgt. In diesem Bereich bis zum Erreichen eines Maximums steigt die Kraft monoton mit dem Schlupf an, wobei im unteren Längsschlupfbereich eine in erster Linie lineare Beziehung besteht. Mit zunehmenden Druck im Bremszylinder wird somit auch die Bremskraft erhöht. Dieser Bereich wird als der stabile Bereich der µ-Schlupf-Kurve bezeichnet. Bei einer weiteren Steigerung der Kraft in der Bremsanlage fällt nach Überschreitung des Maximums die auf die Straße übertragene Kraft ab. In diesem Bereich stellt sich kein stationärer Schlupf mehr ein. Vielmehr tendiert das Rad letztendlich zum Blockieren. Dieser Bereich der µ-Schlupf-Kurve wird als instabiler Bereich bezeichnet.

Bei aktuellen Regelsystemen werden während der Regelzyklen stets weite Bereiche der µ-Schlupf-Kurve durchlaufen. Die auftretenden Radkräfte werden dabei nur indirekt über die zeitliche Veränderung der Raddrehzahlen ermittelt, wobei die Regelung weiterer Eingangsgrößen wie Lenkwinkel, Bremsvordruck, Drehrate, Fahrzeug-Querund Längsbeschleunigung sowie Motordrehzahl und Motormomente als Eingangsgrößen verwendet.

Die aktuellen Regelungen, beispielsweise beim ABS, arbeiten folgendermaßen. Zunächst steigt beim Anbremsen der Radbremsdruck schnell an. Sobald die Radverzögerung eine feste Schwelle überschreitet, wird der Radbremsdruck abgebaut, und zwar so lange, wie die feste Schwelle überschritten bleibt. Nach dem Unterschreiten der Schwelle schließt sich während einer bestimmten Zeitdauer ein langsamer Druckaufbau an. Es folgt ein schneller Druckaufbau, wenn nicht schon vorher durch das Überbremsen ein neuer Regelzyklus eingeleitet wird. Die Regelung ist bei aktuellen Systemen durch die Berücksichtigung weiterer Regelgrößen modifiziert, beispielsweise durch Berücksichtigung der Radumfangsbeschleunigung. Letztlich kommt es bei den aktuellen Regelsystemen grundsätzlich zu einem ständigen Druckaufbau beziehungsweise Druckabbau im Bremssystem, wozu ein hoher Durchfluss von Bremsflüssigkeit erforderlich ist. Dies führt zum bekannten pulsierenden Bremspedal bei einsetzender ABS-Regelung.

Bei herkömmlichen Radschlupf-Regelsystemen ist ferner als Nachteil zu verzeichnen, dass die Beziehung zwischen den Radkräften und dem Radschlupf, das heißt die µ-Schlupf-Kurven nur sehr ungenau bekannt sind. Dies hat den Grund, dass der Verlauf der Kurven sehr stark von äußeren Randbedingungen wie Reibwert, Normalkraft und Schräglauf abhängt und insofern nicht durch die herkömmlich verwendeten Regelgrößen beliebig genau bestimmbar ist. Daher können die Radkräfte nur ungenau eingestellt werden.

### Vorteile der Erfindung

Die Erfindung baut auf dem gattungsgemäßen Verfahren dadurch auf, dass als Regelgrößen Radkräfte verwendet werden, dass die Istkräfte der Radkräfte durch eine die Radkräfte messende Sensorik ermittelt werden, dass an den Rädern Momente mit einer Modulationsfrequenz erzeugt werden, wodurch der Schlupf der Räder und die Radkräfte an den Rädern verändert werden können, _dass der Schlupf der Räder und die Radkräfte der Räder ausgewertet werden und dass aus der Auswertung des Schlupfes der Räder und der Radkräfte der Räder die Sollwerte der Radkräfte ermittelt werden. Während eines Regelzyklus werden also die Radkräfte gemessen und dem jeweils aktuellen Schlupf zugeordnet. Durch die Modulation der Radmomente ist es möglich, diese ermittelten Werte laufend zu aktualisieren. Letztlich gelingt es so, den Sollwert und den Istwert der Radkräfte zu bestimmen und die Radkraft auf den Sollwert einzustellen.

Vorzugsweise werden durch die die Radkräfte messende Sensorik die Längskräfte ermittelt. Diese Längskräfte sind insbesondere bei Bremsvorgängen und Beschleunigungsvorgängen entscheidend, wobei die Sollwerte der Radkräfte so bestimmt werden, dass maximale Radkräfte vorliegen.

Es kann aber auch von großem Vorteil sein, dass durch die die Radkräfte messende Sensorik die Querkräfte ermittelt werden. Die Querkräfte sind insbesondere im Hinblick auf die Stabilisierung eines zum Schleudern neigenden Fahrzeugs als wichtige Größen zu berücksichtigen.

In einer besonders vorteilhaften Ausführungsform des erfindungsgemäßen Verfahrens ist dieses dadurch weitergebildet, dass die Momente an den Rädern hydraulisch erzeugt werden. Das Einbringen einer hydraulischen Modulationsfrequenz kann individuell für jedes Rad getrennt erfolgen oder auch gemeinsam für die Räder einer Achse oder für alle Räder. Vorzugsweise werden vorhandene hydraulische Komponenten des Bremssystems im Rahmen der hydraulischen Momentenvariation genutzt.

Es kann aber auch vorteilhaft sein, dass die Momente an den Rädern durch Elektromotoren erzeugt werden. Die eigentliche Bremskraft, die über eine Hydraulik bereitgestellt wird, wird auch weiterhin individuell für jedes Rad geregelt. Die Hydraulik stellt einen Bremsdruck zur Verfügung, der im zeitlichen Mittel in einem Zeitintervall von zirka 50 ms konstant ist. In dieser Zeit wird das Bremsmoment mittels eines Elektromotors kontinuierlich mit einer vorzugsweise festen Modulationsfrequenz verändert. Diese Modulation des Bremsmomentes kann radindividuell, achsindividuell oder für alle Räder identisch erfolgen. Die Modulation wird nicht zur eigentlichen aktiven Bremsung herangezogen sondern sie dient dazu, ein gezieltes Störsignal in den Bremsvorgang einzukoppeln. Da dieses Störsignal bei allen oder mehreren Rädern gleich sein kann, kann es beispielsweise zentral in den Antriebsstrang eingespeist werden.

Weiterhin kann die vorliegende Erfindung besonders vorteilhaft dadurch weitergebildet sein, dass die Amplitude der Modulationsfrequenz wesentlich kleiner ist als die beim normalen Fahrbetrieb auftretenden Momente. Der normale Fahrbetrieb wird daher nicht durch das Aufprägen der variierenden Momente beeinflusst, wobei gleichwohl der Einfluss der Momente auf Radkraft und Schlupf bestimmt werden kann.

Weiterhin ist es von besonderem Vorteil, dass die Auswertung der Radkräfte und des Schlupfs der Räder gezielt im Frequenzbereich der bekannten Modulationsfrequenz erfolgt. Auf diese Weise erhält man sehr rauscharme Signale, die eine genaue Auswertung der interessierenden Werte erlauben.

Bei bevorzugten Ausführungsformen des erfindungsgemäßen Verfahrens ist vorgesehen, dass die Modulationsfrequenz im Bereich von 50 bis 100 Hz liegt. Frequenzen in diesem Bereich lassen sich beispielsweise mit einem Elektromotor darstellen, und sie sind hoch genug, um eine ausreichend schnelle Regelung zur Verfügung zu stellen.

Weiterhin kann das erfindungsgemäße Verfahren in vorteilhafter Weise dadurch weitergebildet sein, dass durch die Auswertung der Radkräfte und des Schlupfes der Räder Radlängskraft-Kennlinien der Räder ermittelt werden und dass als Sollwerte der Radkräfte die im Maximum der Radlängskraft-Kennlinien vorliegenden Radkräfte verwendet werden. Aufgrund der Aufprägung der Modulationsmomente lässt sich somit ein großer Bereich der möglichen Radkräfte auswerten, so dass stets aktuelle Radkraft-Kennlinien (µ-Schlupf-Kennlinien) zur Verfügung stehen. Da im Maximum der Radlängskraft-Kennlinie die maximale Kraft durch die Räder auf die Straße übertragen werden kann, ist es sinnvoll, diesen Punkt der Radlängskraft-Kennlinie als Sollwert der Regelung zu verwenden.

weiterhin ist das erfindungsgemäße Verfahren dadurch vorteilhaft, dass durch die Auswertung der Radkräfte und des Schlupfes der Räder Radquerkraft-Kennlinien der Räder ermittelt werden und dass aus den Radquerkraft-Kennlinien ein Sollschlupf der jeweiligen Räder ermittelt wird, bei dem die Sollwerte der jeweiligen Radquerkräfte auftreten. Damit kann das erfindungsgemäße Verfahren zur Stabilisierung eines zum Schleudern neigenden Fahrzeugs verwendet werden. Mit Hilfe der Querkraft-Kennlinie lässt sich für jedes Rad der Sollschlupf ermitteln, bei dem die geforderten Querkräfte auftreten.

Bei einer bevorzugten Weiterbildung des erfindungsgemäßen Verfahrens ist dieses so gestaltet, dass durch Extrapolation des linear ansteigenden Bereiches einer Radlängskraft-Kennlinie ein Schlupf λ₀ ermittelt wird, der der Radlängskraft Null entspricht, und dass die ermittelten Werte des Radschlupfes unter Verwendung des Schlupfes λ₀ korrigiert werden. Diese Weiterbildung des Verfahrens kann beispielsweise so gestaltet sein, dass zunächst die Längskraft-Kennlinie in ihrem nahezu linear ansteigenden stabilen Teil identifiziert wird und dass nachfolgend beispielsweise durch lineare Extrapolation der Nulldurchgang bestimmt wird. Dieser Nulldurchgang entspricht dem Schlupf λ₀, bei dem die Längskraft Null beträgt. Somit kann die Geschwindigkeit des frei rollenden Rades, das heißt die translatorische Radgeschwindigkeit, ermittelt werden. Falls der Radschlupf keinen Fehler aufweist, müsste gelten: λ₀ = 0. Wenn aber eine Abweichung vorliegt, so kann der über eine Referenzbildung ermittelte Radschlupf um den Wert λ₀ korrigiert werden.

Das erfindungsgemäße Verfahren ist in besonders einfacher und vorteilhafter Weise so gestaltet, dass die Steigung einer Radlängskraft-Kennlinie aus dem Quotienten der Radschlupfmodulation und der Radlängskraftmodulation ermittelt wird. Somit stehen die für die Radlängskraft-Kennlinie interessierenden Werte durch einfache mathematische Operationen zur Verfügung.

Die Erfindung baut auf dem gattungsgemäßen System dadurch auf, dass die Regelgrößen Radkräfte sind, dass die Mittel zum Ermitteln der Istwerte der Radkräfte als eine die Radkräfte messende Sensorik realisiert sind, dass Mittel zum Modulieren von Momenten an den Rädern mit einer Modulationsfrequenz vorgesehen sind, wodurch der Schlupf der Räder und die Radkräfte an den Rädern verändert werden können, dass Mittel zum Auswerten des Schlupfes der Räder und der Radkräfte der Räder vorgesehen sind und dass die Mittel zum Ermitteln der Sollwerte die Ergebnisse aus der Auswertung des Schlupfes der Räder und der Radkräfte der Räder verwenden. Auf diese Weise werden in einem Radschlupf-Regelsystem die Vorteile des erfindungsgemäßen Verfahrens umgesetzt. Insbesondere werden als Regelgrößen direkt die Radkräfte verwendet. Ferner werden die Sollwerte der Radkräfte schnell angepasst und die angepassten Werte bei der Regelung der Radkräfte berücksichtigt.

Vorzugsweise sind durch die die Radkräfte messende Sensorik die Längskräfte ermittelbar. Diese Längskräfte sind insbesondere bei Bremsvorgängen und Beschleunigungsvorgängen entscheidend, wobei die Sollwerte der Radkräfte so bestimmt werden, dass maximale Radkräfte vorliegen.

Es kann aber auch von großem Vorteil sein, dass durch die die Radkräfte messende Sensorik die Querkräfte ermittelbar sind. Die Querkräfte sind insbesondere im Hinblick auf die Stabilisierung eines zum Schleudern neigenden Fahrzeugs als wichtige Größen zu berücksichtigen.

In einer besonders vorteilhaften Ausführungsform des erfindungsgemäßen Systems ist dieses dadurch weitergebildet, dass die Momente an den Rädern hydraulische Mittel sind. Das Einbringen einer hydraulischen Modulationsfrequenz kann individuell für jedes Rad getrennt erfolgen oder auch gemeinsam für die Räder einer Achse oder für alle Räder. Vorzugsweise werden vorhandene hydraulische Komponenten des Bremssystems im Rahmen der hydraulischen Momentenvariation genutzt.

Es kann aber auch vorteilhaft sein, dass die Momente an den Rädern Elektromotoren sind. Die eigentliche Bremskraft, die über eine Hydraulik bereitgestellt wird, wird auch weiterhin individuell für jedes Rad geregelt. Die Hydraulik stellt einen Bremsdruck zur Verfügung, der im zeitlichen Mittel in einem Zeitintervall von zirka 50 ms konstant ist. In dieser Zeit wird das Bremsmoment mittels eines Elektromotors kontinuierlich mit einer vorzugsweise festen Modulationsfrequenz verändert. Diese Modulation des Bremsmomentes kann radindividuell, achsindividuell oder für alle Räder identisch erfolgen. Die Modulation wird nicht zur eigentlichen aktiven Bremsung herangezogen sondern sie dient dazu, ein gezieltes Störsignal in den Bremsvorgang einzukoppeln. Da dieses Störsignal bei allen oder mehreren Rädern gleich sein kann, kann es beispielsweise zentral in den Antriebsstrang eingespeist werden.

Weiterhin kann die vorliegende Erfindung besonders vorteilhaft dadurch weitergebildet sein, dass die Amplitude der Modulationsfrequenz wesentlich kleiner ist als die beim normalen Fahrbetrieb auftretenden Momente. Der normale Fahrbetrieb wird daher nicht durch das Aufprägen der variierenden Momente beeinflusst, wobei gleichwohl der Einfluss der Momente auf Radkraft und Schlupf bestimmt werden kann.

Weiterhin ist es von besonderem Vorteil, dass die Mittel zum Auswerten der Radkräfte und des Schlupfs der Räder gezielt in Frequenzbereichen der bekannten Modulationsfrequenz arbeiten. Auf diese Weise erhält man sehr rauscharme Signale, die eine genaue Auswertung der interessierenden Werte erlauben.

Bei bevorzugten Ausführungsformen des erfindungsgemäßen Systems ist vorgesehen, dass die Modulationsfrequenz im Bereich von 50 bis 100 Hz liegt. Frequenzen in diesem Bereich lassen sich beispielsweise mit einem Elektromotor darstellen, und sie sind hoch genug, um eine ausreichend schnelle Regelung zur Verfügung zu stellen.

Weiterhin kann das erfindungsgemäße System in vorteilhafter Weise dadurch weitergebildet sein, dass durch die Auswertung der Radkräfte und des Schlupfes der Räder Radlängskraft-Kennlinien der Räder ermittelbar sind und dass als Sollwerte der Radkräfte die im Maximum der Radlängskraft-Kennlinien vorliegenden Radkräfte verwendet werden. Aufgrund der Aufprägung der Modulationsmomente lässt sich somit ein großer Bereich der möglichen Radkräfte auswerten, so dass stets aktuelle Radkraft-Kennlinien (µ-Schlupf-Kennlinien) zur Verfügung stehen. Da im Maximum der Radlängskraft-Kennlinie die maximale Kraft durch die Räder auf die Straße übertragen werden kann, ist es sinnvoll, diesen Punkt der Radlängskraft-Kennlinie als Sollwert der Regelung zu verwenden.

Weiterhin ist das erfindungsgemäße System dadurch vorteilhaft, dass durch die Auswertung der Radkräfte und des Schlupfes der Räder Radquerkraft-Kennlinien der Räder ermittelbar sind und dass aus den Radquerkraft-Kennlinien ein Sollschlupf der jeweiligen Räder ermittelt wird, bei dem die Sollwerte der jeweiligen Radquerkräfte auftreten. Damit kann das erfindungsgemäße Verfahren zur Stabilisierung eines zum Schleudern neigenden Fahrzeugs verwendet werden. Mit Hilfe der Querkraft-Kennlinie lässt sich für jedes Rad der Sollschlupf ermitteln, bei dem die geforderten Querkräfte auftreten.

Bei einer bevorzugten Weiterbildung des erfindungsgemäßen Systems ist dieses so gestaltet, dass durch Extrapolation des linear ansteigenden Bereiches einer Radlängskraft-Kennlinie ein Schlupf λ₀ ermittelbar ist, der der Radlängskraft Null entspricht, und dass die ermittelten Werte des Radschlupfes unter Verwendung des Schlupfes λ₀ korrigierbar sind. Diese Weiterbildung des Verfahrens kann beispielsweise so gestaltet sein, dass zunächst die Längskraft-Kennlinie in ihrem nahezu linear ansteigenden stabilen Teil identifiziert wird und dass nachfolgend beispielsweise durch lineare Extrapolation der Nulldurchgang bestimmt wird. Dieser Nulldurchgang entspricht dem Schlupf λ₀, bei dem die Längskraft Null beträgt. Somit kann die Geschwindigkeit des frei rollenden Rades, das heißt die translatorische Radgeschwindigkeit, ermittelt werden. Falls der Radschlupf keinen Fehler aufweist, müsste gelten: λ₀ = 0. Wenn aber eine Abweichung vorliegt, so kann der über eine Referenzbildung ermittelte Radschlupf um den Wert λ₀ korrigiert werden.

Das erfindungsgemäße System ist in besonders einfacher und vorteilhafter Weise so gestaltet, dass die Steigung einer Radlängskraft-Kennlinie aus dem Quotienten der Radschlupfmodulation und der Radlängskraftmodulation ermittelbar sind. Somit stehen die für die Radlängskraft-Kennlinie interessierenden Werte durch einfache mathematische Operationen zur Verfügung.

Der Erfindung liegt die Erkenntnis zugrunde, dass es möglich ist, die µ-Schlupf-Kurven mittels der gemessenen Radkräfte zu identifizieren. Die Kenntnis der µ-Schlupf-Kurven ermöglicht, die Sollwerte für die Radschlupfregler wesentlich genauer zu bestimmen als bei herkömmlichen Systemen und auf diese Weise die Funktion der Radschlupfregelsysteme signifikant zu verbessern.

### Zeichnungen

Die Erfindung wird nun mit Bezug auf die begleitenden Zeichnungen anhand bevorzugter Ausführungsformen beispielhaft erläutert.

### Dabei zeigt:

- Figur 1: ein Blockdiagramm eines erfindungsgemäßen Systems;
- Figur 2: ein Flussdiagramm eines Verfahrens zum Bestimmen von Sollwerten von Radkräften; und
- Figur 3: ein Diagramm mit µ-Schlupf-Kurven.

### Beschreibung der Ausführungsbeispiele

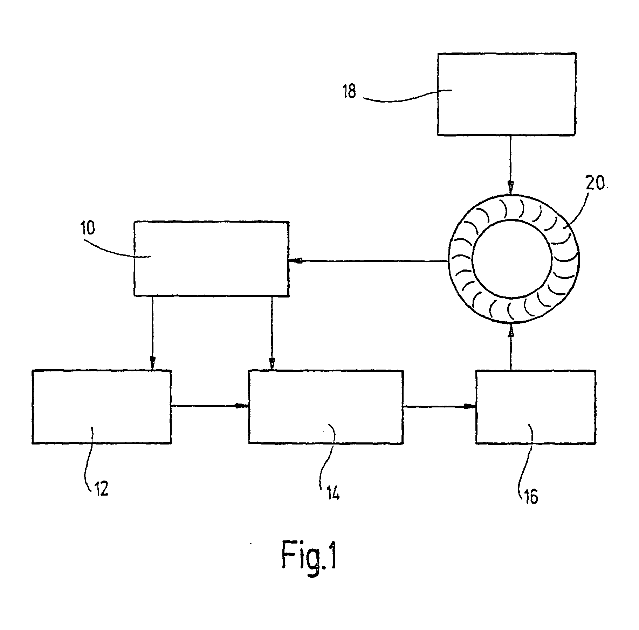

Figur 1 zeigt ein Blockschaltbild eines erfindungsgemäßen Systems. Es ist ein Rad 20 stellvertretend für die Räder eines Kraftfahrzeugs dargestellt. Eine die Radkraft messende Sensorik 10 ist vorgesehen, um die Radkräfte des Rades 20 zu messen. Die Ausgangsdaten der die Radkraft messenden Sensorik 10 werden an eine Einheit 12 ausgegeben, in der die Radkräfte und der Schlupf der Räder ausgewertet wird. Hierzu kann der Einheit 12 zusätzlich Information beispielsweise über den Bremsdruck vorliegen. In der Einheit 12 wird durch Auswerten verschiedener Radkräfte eine Kennlinie erzeugt, aus der durch Bestimmung des Maximalwertes der Kennlinie ein aktueller Sollwert für die Radkraft ermittelt wird. Der ermittelte Sollwert wird an eine Regelung 14 weitergegeben. Ferner erhält die Regelung 14 Informationen über die Istwerte der Radkraft, wobei im vorliegenden Beispiel diese Information direkt von der die Radkraft messenden Sensorik 10 übertragen wird. In der Regelung 14 werden die Sollwerte mit den Istwerten der Radkräfte verglichen. Stimmen die Istwerte nicht mit den Sollwerten überein, so werden Mittel 16 aktiviert, die die Radkraft am Rad 16 direkt beeinflussen. Beispielsweise wird direkt der Bremsdruck verändert.

Um die µ-Schlupf-Kurve möglichst genau auszumessen, sind Modulationsmittel 18 vorgesehen, die dem Rad 20 Anregungssignale kleiner Amplituden aufprägen (Lock-in-Technik). Der Radschlupf wird periodisch mit Hilfe hydraulischer Eingriffe oder mittels elektrischer Radmotoren ausgelenkt. Die Auswertung der Einrichtung 12 kann dann gezielt im Frequenzbereich der bekannten Anregungsfrequenz stattfinden, beispielsweise bei 50 Hz. Man erhält sehr rauscharme Signale, die eine genaue Identifikation der µ-Schlupf-Kennlinie erlauben.

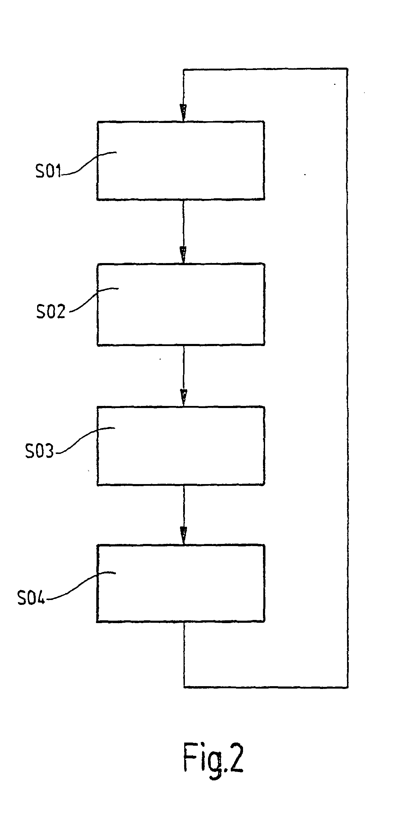

In Figur 2 ist ein Flussdiagramm dargestellt, welches einen Teil von einem Regelzyklus darstellt, wobei in diesem Teil ein Sollwert bestimmt wird. Zunächst wird angegeben, welche Verfahrensschritte die in Figur 2 angegebenen Symbole bezeichnen:
S01: Modulation der Radkraft.
S02: Messen der Radkraft.
S03: Auswerten der Radkraft und des Schlupfes.
S04: Bestimmen von Sollwerten.

In Schritt S01 wird die Radkraft moduliert. Diese Modulation der Radkraft wird kontinuierlich vorgenommen. Als Modulationsfrequenz kommen beispielsweise Frequenzen im Bereich von 50 bis 100 Hz in Frage.

In Schritt S02 wird die Radkraft gemessen. Die Messung der Radkraft mittels einer die Radkraft messenden Sensorik (10, Figur 1) dient zum einen der Messung von Istwerten, die von der Regelung (14, Figur 1) benötigt werden.

Zum anderen werden die Ergebnisse der Istwertmessung durch die die Radkraft messende Sensorik (10, Figur 1) aber auch einer Einrichtung (12, Figur 1) übergeben, in der eine Auswertung der Radkraft und des Schlupfes stattfindet. Dies ist in Figur 2 in Schritt S03 angegeben. Zur Auswertung des Schlupfes kann beispielsweise zusätzlich der Bremsdruck herangezogen werden.

In Schritt S04 werden dann die Sollwerte der Radkraft bestimmt, wobei vorzugsweise als Sollwert die dem Maximum der µ-Schlupf-Kurve entsprechende Radkraft verwendet wird.

Figur 3 zeigt zwei µ-Schlupf-Kurven. Gegeneinander aufgetragen sind auf der Hochachse die Radkraft µ und auf der Rechtsachse der Radlängsschlupf. Die mit a bezeichnete Kurve gibt die µ-Schlupf-Kurve für die Radlängskraft an. Die mit b bezeichnete Kurve gibt die µ-Schlupf-Kurve für die Querkraft an.

Wie im Zusammenhang mit dem Stand der Technik bereits beschrieben wurde, hat die Längskraftkurve zunächst einen nahezu linearen Bereich, der über ein Maximum in einen abfallenden Bereich übergeht. Der ansteigende Bereich wird als stabiler Bereich bezeichnet, der abfallende Bereich ist instabil und führt schließlich zu einem Blockieren der Räder. Das Maximum der Längskraft-Kennlinie bezeichnet die maximale Radkraft, die auf die Straße aufgebracht werden kann. Somit ist das Maximum der Längskraft-Kennlinie als Sollwert für eine Regelung geeignet.

Die Querkraft-Kennlinie ist insbesondere im Hinblick auf die Stabilisierung eines zum Schleudern neigenden Fahrzeugs nützlich.

Die Sollschlupfbestimmung wird anhand von zwei Beispielen bestimmt:
- Beispiel 1:: Bei Geradeaus-ABS-Bremsungen wird ein möglichst kurzer Bremsweg angestrebt. Deshalb wird als Sollschlupf λ* für den ABS-Schlupfregler der Schlupf bestimmt, bei dem die Längskraft-Kennlinie ihr Maximum annimmt. In der Figur liegt dieser Wert bei λ* = 20%.
- Beispiel 2:: Für die Stabilisierung eines zum Schleudern neigenden Fahrzeugs ist an jedem Rad eine bestimmte Querkraft erforderlich. Mit Hilfe der Querkraft-Kennlinie lässt sich für jedes Rad der Sollschlupf λ* ermitteln, bei dem die geforderten Querkräfte auftreten.

Nachfolgend wird der Einfluss der Momentenmodulation anhand von drei Beispielen erläutert.
- Beispiel 1:: Die periodische Radschlupfauslenkung PD und die Radlängskraftauslenkung FL sind in Phase. Das heißt, dass mit zunehmendem Bremsdruck die Bremskraft ansteigt. Folglich befindet sich das Rad im stabilen Ast der Längskraft-Kennlinie.
- Beispiel 2:: Die Radlängskraftauslenkung FL ändert sich trotz Variation der Radschlupfauslenkung PD nicht. Dies bedeutet, dass sich das Rad im lokalen Maximum der Längskraft-Kennlinie befindet.
- Beispiel 3:: Die Radschlupfauslenkung PD und die Radlängskraftauslenkung FL sind gegenphasig. Dies bedeutet, dass die Bremskraft mit zunehmendem Bremsdruck abnimmt. Das Rad befindet sich im instabilen Ast der Radlängskraft-Kennlinie.

Die Längskraft-Kennlinie kann weiterhin in vorteilhafter Weise zur Bestimmung der translatorischen Radgeschwindigkeit verwendet werden. Ist die Längskraft-Kennlinie in ihrem nahezu linear ansteigenden stabilen Teil identifiziert, so ist es möglich, durch beispielsweise lineare Extrapolation den Nulldurchgang zu bestimmen, also den Schlupf λ₀, bei dem die Längskraft Null ist. Auf diese Weise kann die Geschwindigkeit des freirollenden Rades ermittelt werden, die als translatorische Radgeschwindigkeit bezeichnet wird. Falls der Radschlupf keinen Fehler aufweist, müsste λ₀ = 0 sein, so wie es in Figur 3 dargestellt ist. Wenn aber eine Abweichung vorliegt, so kann der über eine Referenzbildung ermittelte Radschlupf um den Wert λ₀ korrigiert werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Regeln der Bremskraft bei einem Fahrzeug mit den Schritten:
- Ermitteln von Istwerten von Regelgrößen,
- Ermitteln von Sollwerten von Regelgrößen,
- Vergleichen der Istwerte mit den Sollwerten, wodurch Vergleichsergebnisse erzielt werden, und
- Beeinflussen von Radkräften auf der Grundlage der Vergleichsergebnisse,
- dass als Regelgrößen Radkräfte verwendet werden,
- dass die Istwerte der Radkräfte durch eine die Radkraft messende Sensorik (10) ermittelt werden,
**dadurch gekennzeichnet,**
- **dass** an den Rädern Momente mit einer Modulationsfrequenz erzeugt werden, wodurch der Schlupf der Räder (20) und die Radkraft an den Rädern (20) verändert werden können,
- **dass** der Schlupf der Räder (20) und die Radkräfte der Räder (20) ausgewertet werden und
- **dass** aus der Auswertung des Schlupfes der Räder (20) und der Radkräfte der Räder (20) die Sollwerte der Radkräfte ermittelt werden.

2. Verfahren nach Anspruch 1, **dadurch gekennzeichnet, dass** durch die die Radkraft messende Sensorik (10) die Längskräfte ermittelt werden.

3. Verfahren nach Anspruch 1 oder 2, **dadurch gekennzeichnet, dass** durch die die Radkraft messende Sensorik (10) die Querkräfte ermittelt werden.

4. Verfahren nach einem der vorangehenden Ansprüche, **dadurch gekennzeichnet, dass** die Momente an den Rädern (20) hydraulisch erzeugt werden.

5. Verfahren nach einem der vorangehenden Ansprüche, **dadurch gekennzeichnet, dass** die Momente an den Rädern (20) durch Elektromotoren erzeugt werden.

6. Verfahren nach einem der vorangehenden Ansprüche, **dadurch gekennzeichnet, dass** die Amplitude der Modulationsfrequenz wesentlich kleiner ist als die beim normalen Fahrbetrieb auftretenden Momente.

7. Verfahren nach einem der vorangehenden Ansprüche, **dadurch gekennzeichnet, dass** die Auswertung der Radkräfte und des Schlupfes der Räder (20) gezielt in Frequenzbereichen der bekannten Modulationsfrequenz erfolgt.

8. Verfahren nach einem der vorangehenden Ansprüche, **dadurch gekennzeichnet, dass** die Modulationsfrequenz im Bereich von 50 bis 100 Hz liegt.

9. Verfahren nach einem der vorangehenden Ansprüche, **dadurch gekennzeichnet,**
- **dass** durch die Auswertung der Radkräfte und des Schlupfes der Räder (20) Radlängskraft-Kennlinien der Räder (20) ermittelt werden und
- **dass** als Sollwerte der Radkräfte die im Maximum der Radlängskraft-Kennlinien vorliegenden Radkräfte verwendet werden.

10. Verfahren nach einem der vorangehenden Ansprüche, **dadurch gekennzeichnet,**
- **dass** durch die Auswertung der Radkräfte und des Schlupfes der Räder (20) Radquerkraft-Kennlinien der Räder ermittelt werden und
- **dass** aus den Radquerkraft-Kennlinien ein Sollschlupf der jeweiligen Räder ermittelt wird, bei dem die Sollwerte der jeweiligen Radquerkräfte auftreten.

11. Verfahren nach einem der vorangehenden Ansprüche, **dadurch gekennzeichnet,**
- **dass** durch Extrapolation des linear ansteigenden Bereichs einer Radlängskraft-Kennlinie ein Schlupf λ₀ ermittelt wird, der der Radlängskraft Null entspricht und
- **dass** die ermittelten Werte des Radschlupfes unter Verwendung des Schlupfes λ₀ korrigiert werden.

12. Verfahren nach einem der vorangehenden Ansprüche, **dadurch gekennzeichnet, dass** die Steigung einer Radlängskraft-Kennlinie aus dem Quotienten der Radschlupfmodulation und der Radlängskraftmodulation ermittelt wird.

13. System zum Regeln der Bremskraft bei einem Fahrzeug mit:
- Mitteln (10) zum Ermitteln von Istwerten von Regelgrößen,
- Mitteln (12) zum Ermitteln von Sollwerten von Regelgrößen,
- Mitteln (14) zum Vergleichen der Istwerte mit den Sollwerten, wodurch Vergleichsergebnisse erzielt werden, und
- Mitteln (16) zum Beeinflussen von Radkräften auf der Grundlage der Vergleichsergebnisse,
- dass die Regelgrößen Radkräfte sind,
- dass die Mittel (10) zum Ermitteln der Istwerte der Radkräfte als eine die Radkraft messende Sensorik (10) realisiert sind,
**dadurch gekennzeichnet,**
- **dass** Mittel (18) zum Modulieren von Momenten an den Rädern mit einer Modulationsfrequenz vorgesehen sind, wodurch der Schlupf der Räder (20) und die Radkraft an den Rädern (20) verändert werden können,
- **dass** Mittel (12) zum Auswerten des Schlupfes der Räder (20) und der Radkräfte der Räder (20) vorgesehen sind und
- **dass** die Mittel (12) zum Ermitteln der Sollwerte die Ergebnisse aus der Auswertung des Schlupfes der Räder (20) und der Radkräfte der Räder (20) verwenden.

14. System nach Anspruch 13, **dadurch gekennzeichnet, dass** durch die die Radkraft messende Sensorik (10) die Längskräfte ermittelbar sind.

15. System nach Anspruch 13 oder 14, **dadurch gekennzeichnet, dass** durch die die Radkraft messende Sensorik (10) die Querkräfte ermittelbar sind.

16. System nach einem der Ansprüche 13 bis 15, **dadurch gekennzeichnet, dass** die Mittel (18) zum Modulieren der Momente an den Rädern (20) hydraulische Mittel sind.

17. System nach einem der Ansprüche 13 bis 16, **dadurch gekennzeichnet, dass** die Momente an den Rädern (20) Elektromotoren sind.

18. System nach einem der Ansprüche 13 bis 17, **dadurch gekennzeichnet, dass** die Amplitude der Modulationsfrequenz wesentlich kleiner ist als die beim normalen Fahrbetrieb auftretenden Momente.

19. System nach einem der Ansprüche 13 bis 18, **dadurch gekennzeichnet, dass** die Mittel (12) zum Auswerten der Radkräfte und des Schlupfes der Räder (20) gezielt in Frequenzbereichen der bekannten Modulationsfrequenz arbeiten.

20. System nach einem der Ansprüche 13 bis 19, **dadurch gekennzeichnet, dass** die Modulationsfrequenz im Bereich von 50 bis 100 Hz liegt.

21. System nach einem der Ansprüche 13 bis 20, **dadurch gekennzeichnet,**
- **dass** durch die Auswertung der Radkräfte und des Schlupfes der Räder (20) Radlängskraft-Kennlinien der Räder (20) ermittelbar sind und
- **dass** als Sollwerte der Radkräfte die im Maximum der Radlängskraft-Kennlinien vorliegenden Radkräfte verwendet werden.

22. System nach einem der Ansprüche 13 bis 21, **dadurch gekennzeichnet,**
- **dass** durch die Auswertung der Radkräfte und des Schlupfes der Räder (20) Radquerkraft-Kennlinien der Räder ermittelbar sind und
- **dass** aus den Radquerkraft-Kennlinien ein Sollschlupf der jeweiligen Räder ermittelt wird, bei dem die Sollwerte der jeweiligen Radquerkräfte auftreten.

23. System nach einem der Ansprüche 13 bis 22, **dadurch gekennzeichnet,**
- **dass** durch Extrapolation des linear ansteigenden Bereichs einer Radlängskraft-Kennlinie ein Schlupf λ₀ ermittelbar ist, der der Radlängskraft Null entspricht und
- **dass** die ermittelten Werte des Radschlupfes unter Verwendung des Schlupfes λ₀ korrigierbar sind.

24. System nach einem der Ansprüche 13 bis 23, **dadurch gekennzeichnet, dass** die Steigung einer Radlängskraft-Kennlinie aus dem Quotienten der Radschlupfmodulation und der Radlängskraftmodulation ermittelbar ist.

## Claims

1. Method for controlling the braking force in a vehicle, having the steps:
- determining actual values of controlled variables,
- determining set point values of controlled variables,
- comparing the actual values with the set point values, as a result of which comparison results are achieved, and
- influencing wheel forces on the basis of the comparison results,
- wherein wheel forces are used as controlled variables, and
- wherein the actual values of the wheel forces are determined by a sensor system (10) which measures the wheel force,
**characterized**
- **in that** moments with a modulation frequency are generated at the wheels, as a result of which the slip of the wheels (20) and the wheel force at the wheels (20) can be changed,
- **in that** the slip of the wheels (20) and the wheel forces of the wheels (20) are evaluated, and
- in that the set point values of the wheel forces are determined from the evaluation of the slip of the wheels (20) and the wheel forces of the wheels (20).

2. Method according to Claim 1, **characterized in that** the longitudinal forces are determined by the sensor system (10) which measures the wheel force.

3. Method according to Claim 1 or 2, **characterized in that** the transverse forces are determined by the sensor system (10) which measures the wheel force.

4. Method according to one of the preceding claims, **characterized in that** the moments at the wheels (20) are generated hydraulically.

5. Method according to one of the preceding claims, **characterized in that** the moments at the wheels (20) are generated by electric motors.

6. Method according to one of the preceding claims, **characterized in that** the amplitude of the modulation frequency is significantly lower than the moments occurring in the normal driving mode.

7. Method according to one of the preceding claims, **characterized in that** the wheel forces and the slip of the wheels (20) are evaluated selectively in frequency ranges of the known modulation frequency.

8. Method according to one of the preceding claims, **characterized in that** the modulation frequency is in the range from 50 to 100 Hz.

9. Method according to one of the preceding claims, **characterized**
- **in that** wheel longitudinal force characteristic curves of the wheels (20) are determined by evaluating the wheel forces and the slip of the wheels (20), and
- **in that** the wheel forces which are present at the maximum value of the wheel longitudinal force characteristic curves are used as set point values of the wheel forces.

10. Method according to one of the preceding claims, **characterized**
- **in that** wheel transverse force characteristic curves of the wheels are determined by evaluating the wheel forces and the slip of the wheels (20), and
- **in that** a set point slip of the respective wheels at which the set point values of the respective wheel transverse forces occur is determined from the wheel transverse force characteristic curves.

11. Method according to one of the preceding claims, **characterized**
- **in that** a slip λ₀ which corresponds to the wheel longitudinal force zero is determined by extrapolating the linearly increasing range of a wheel longitudinal force characteristic curve, and
- **in that** the determined values of the wheel slip are corrected using the slip λ₀.

12. Method according to one of the preceding claims, **characterized in that** the gradient of a wheel longitudinal force characteristic curve is determined from the quotient of the wheel slip modulation and the wheel longitudinal force modulation.

13. System for controlling the braking force in a vehicle, having:
- means (10) for determining actual values of controlled variables,
- means (12) for determining set point values of controlled variables,
- means (14) for comparing the actual values with the set point values, as a result of which comparison results are achieved, and
- means (16) for influencing wheel forces on the basis of the comparison results,
- wherein the controlled variables are wheel forces,
- wherein the means (10) for determining the actual values of the wheel forces are implemented as a sensor system (10) which measures the wheel force,
**characterized**
- **in that** means (18) are provided for modulating moments at the wheels with a modulation frequency, as a result of which the slip of the wheels (20) and the wheel force at the wheels (20) can be changed,
- **in that** means (12) are provided for evaluating the slip of the wheels (20) and the wheel forces of the wheels (20), and
- **in that** the means (12) use the results from the evaluation of the slip of the wheels (20) and the wheel forces of the wheels (20) to determine the set point values.

14. System according to Claim 13, **characterized in that** the longitudinal forces can be determined by the sensor system (10) which measures the wheel force.

15. System according to Claim 13 or 14, **characterized in that** the transverse forces can be determined by the sensor system (10) which measures the wheel force.

16. System according to one of Claims 13 to 15, **characterized in that** the means (18) for modulating the moments at the wheels (20) are hydraulic means.

17. System according to one of Claims 13 to 16, **characterized in that** the moments at the wheels (20) are electric motors.

18. System according to one of Claims 13 to 17, **characterized in that** the amplitude of the modulation frequency is significantly lower than the moments occurring in the normal driving mode.

19. System according to one of Claims 13 to 18, **characterized in that** the means (12) for evaluating the wheel forces and the slip of the wheels (20) operates selectively in frequency ranges of the known modulation frequency.

20. System according to one of Claims 13 to 19, **characterized in that** the modulation frequency is in the range from 50 to 100 Hz.

21. System according to one of Claims 13 to 20, **characterized**
- **in that** wheel longitudinal force characteristic curves of the wheels (20) can be determined by evaluating the wheel forces and the slip of the wheels (20), and
- **in that** the wheel forces which are present at the maximum value of the wheel longitudinal force characteristic curves are used as set point values of the wheel forces.

22. System according to one of Claims 13 to 21, **characterized**
- **in that** wheel transverse force characteristic curves of the wheels can be determined by evaluating the wheel forces and the slip of the wheels (20), and
- **in that** a set point slip of the respective wheels at which the set point values of the respective wheel transverse forces occur is determined from the wheel transverse force characteristic curves.

23. System according to one of Claims 13 to 22, **characterized**
- **in that** a slip λ₀ which corresponds to the wheel longitudinal force zero can be determined by extrapolating the linearly increasing range of a wheel longitudinal force characteristic curve, and
- **in that** the determined values of the wheel slip can be corrected using the slip λ₀.

24. System according to one of Claims 13 to 23, **characterized in that** the gradient of a wheel longitudinal force characteristic curve can be determined from the quotient of the wheel slip modulation and the wheel longitudinal force modulation.

## Revendications

1. Procédé pour réguler la force de freinage d'un véhicule comportant les étapes suivantes:
- déterminer des valeurs réelles de grandeurs de régulation,
- déterminer des valeurs de consigne de grandeurs de régulation,
- comparer les valeurs réelles avec les valeurs de consigne, ce qui donne des résultats de la comparaison, et
- influencer les forces de roues sur la base des résultats de la comparaison,
- utiliser les forces de roues comme grandeurs de régulation,
- déterminer les valeurs réelles des forces de roues au moyen de capteurs (10) mesurant les forces de roues,
**caractérisé en ce qu'**
- on produit des couples aux roues avec une fréquence de modulation, ce qui permet de modifier le patinage des roues (20) et la force de roue aux roues (20),
- on évalue le patinage des roues (20) et les forces de roues aux roues (20), et
- on détermine les valeurs de consigne des forces de roues à partir de l'évaluation du patinage des roues (20) et des forces de roues aux roues (20).

2. Procédé selon la revendication 1,
**caractérisé en ce qu'**
on détermine les forces longitudinales au moyen des capteurs (10) mesurant la force de roue.

3. Procédé selon la revendication 1 ou 2,
**caractérisé en ce qu'**
on détermine les forces transversales au moyen des capteurs (10) mesurant la force de roue.

4. Procédé selon l'une quelconque des revendications précédentes,
**caractérisé en ce qu'**
on produit les couples aux roues (20) de façon hydraulique.

5. Procédé selon l'une quelconque des revendications précédentes,
**caractérisé en ce qu'**
on produit les couples aux roues (20) au moyen de moteurs électriques.

6. Procédé selon l'une quelconque des revendications précédentes,
**caractérisé en ce que**
l'amplitude de la fréquence de modulation est sensiblement plus petite que les couples se produisant lors de la conduite normale.

7. Procédé selon l'une quelconque des revendications précédentes,
**caractérisé en ce que**
l'évaluation des forces de roues et du patinage des roues (20) est effectuée de façon appropriée dans des domaines de fréquence de la fréquence de modulation connue.

8. Procédé selon l'une quelconque des revendications précédentes,
**caractérisé en ce que**
la fréquence de modulation se situe dans le domaine de 50 à 100 Hz.

9. Procédé selon l'une quelconque des revendications précédentes,
**caractérisé en ce qu'**
- on détermine par l'évaluation des forces de roues et du patinage des roues (20) des courbes caractéristiques de la force longitudinale de roue des roues (20), et
- on utilise comme valeurs de consigne des forces de roues les forces de roues existant au maximum des courbes caractéristiques de la force longitudinale de roue.

10. Procédé selon l'une quelconque des revendications précédentes,
**caractérisé en ce qu'**
- on détermine par l'évaluation des forces de roues et du patinage des roues (20) des courbes caractéristiques de la force transversale de roue des roues (20), et
- on détermine à partir des courbes caractéristiques de la force transversale de roue un glissement de consigne des roues respectives, pour lequel les valeurs de consigne des forces transversales de roues se produisent.

11. Procédé selon l'une quelconque des revendications précédentes,
**caractérisé en ce que**
- par extrapolation de la région linéairement croissante d'une courbe caractéristique de la force longitudinale de roue, on détermine un patinage λ₀ qui correspond à une force longitudinale de roue égale à zéro, et
- on corrige les valeurs déterminées du patinage des roues en utilisant le patinage λ₀.

12. Procédé selon l'une quelconque des revendications précédentes,
**caractérisé en ce qu'**
on détermine la pente d'une courbe caractéristique de la force longitudinale de roue à partir du quotient de la modulation du patinage de roue et de la modulation de la force longitudinale de roue.

13. Système pour réguler la force de freinage d'un véhicule, avec
- des moyens (10) pour déterminer des valeurs réelles de grandeurs de régulation,
- des moyens (12) pour déterminer des valeurs de consigne de grandeurs de régulation,
- des moyens (14) pour comparer les valeurs réelles avec les valeurs de consigne, par lesquels on obtient des résultats de la comparaison,
- des moyens (16) pour influencer des forces de roues sur la base des résultats de la comparaison,
- les grandeurs de régulation étant des forces de roues,
- les moyens (10) pour déterminer les valeurs réelles des forces de roues étant constitués par des capteurs (10) mesurant la force de roue,
**caractérisé en ce qu'**
- il est prévu des moyens (18) pour moduler des couples aux roues avec une fréquence de modulation, permettant ainsi de modifier le patinage des roues (20) et la force de roue aux roues (20),
- il est prévu des moyens (12) pour évaluer le patinage des roues (20) et les forces de roues des roues (20), et
- les moyens (12) pour déterminer les valeurs de consigne utilisent les résultats de l'évaluation du patinage des roues (20) et des forces de roues des roues (20).

14. Système selon la revendication 13,
**caractérisé en ce que**
les forces longitudinales peuvent être déterminées au moyen des capteurs (10) mesurant la force de roue.

15. Système selon la revendication 13 ou 14,
**caractérisé en ce que**
les forces transversales peuvent être déterminées au moyen des capteurs (10) mesurant la force de roue.

16. Système selon l'une quelconque des revendications 13 à 15,
**caractérisé en ce que**
les moyens (18) pour moduler les couples aux roues (20) sont des moyens hydrauliques.

17. Système selon l'une quelconque des revendications 13 à 16,
**caractérisé en ce que**
les couples aux roues (20) sont appliqués par des moteurs électriques.

18. Système selon l'une quelconque des revendications 13 à 17,
**caractérisé en ce que**
l'amplitude de la fréquence de modulation est sensiblement plus petite que les couples se produisant lors de la conduite normale.

19. Système selon l'une quelconque des revendications 13 à 18,
**caractérisé en ce que**
les moyens (12) pour évaluer les forces de roues et le patinage des roues (20) travaillent de façon appropriée dans des domaines de fréquence de la fréquence de modulation connue.

20. Système selon l'une quelconque des revendications 13 à 19,
**caractérisé en ce que**
la fréquence de modulation se situe dans le domaine de 50 à 100 Hz.

21. Système selon l'une quelconque des revendications 13 à 20,
**caractérisé en ce qu'**
- on peut déterminer des courbes caractéristiques de la force longitudinale de roue des roues (20) à partir de l'évaluation des forces de roues et du patinage des roues (20), et
- on utilise comme valeurs de consigne des forces de roues les forces de roues existant au maximum des courbes caractéristiques de la force longitudinale de roue.

22. Système selon l'une quelconque des revendications 13 à 21,
**caractérisé en ce qu'**
- on peut déterminer des courbes caractéristiques de la force transversale de roue des roues à partir de l'évaluation des forces de roues et du patinage des roues (20), et
- on détermine à partir des courbes caractéristiques de la force transversale de roue un patinage de consigne des roues respectives, pour lequel les valeurs de consigne des forces transversales de roues respectives se produisent.

23. Système selon l'une quelconque des revendications 13 à 22,
**caractérisé en ce qu'**
- on peut déterminer par extrapolation de la région croissante d'une courbe caractéristique de la force longitudinale de roue un patinage λ₀ qui correspond à une force longitudinale de roue égale à zéro, et
- on peut corriger les valeurs déterminées du patinage de roue en utilisant le patinage λ₀.

24. Système selon l'une quelconque des revendications 13 à 23,
**caractérisé en ce qu'**
on peut déterminer la pente d'une courbe caractéristique de la force longitudinale de roue à partir du quotient de la modulation du patinage de roue et de la modulation de la force longitudinale de roue.
